# EUROPÄISCHE PATENTSCHRIFT

(11) **EP 2 639 004 B1**
(45) Veröffentlichungstag und Bekanntmachung des Hinweises auf die Patenterteilung: **11.05.2016**
(21) Anmeldenummer: 12159601.9
(22) Anmeldetag: 15.03.2012
(51) Int. Cl.: B23H 9/10, F01D 9/04, B23H 3/00

(54) **Schaufelkranzsegment mit Ringraumbegrenzungsfläche mit einem welligen Höhenprofil sowie Verfahren zur Herstellung desselben**
Blade ring segment with inner end wall having an undulating height profile and method for producing same
Segment de couronne d'aubes avec surface de limitation de l'espace annulaire à profil en hauteur ondulé et procédé de fabrication

(43) Veröffentlichungstag der Anmeldung: 18.09.2013
(73) Patentinhaber: MTU Aero Engines AG, 80995 München (DE)
(72) Erfinder: Pernleitner, Martin, 85221 Dachau (DE); Dr. Bichlmaier, Christoph, 86926 Greifenberg (DE); Dr. Zscherp, Carsten, 82194 Gröbenzell (DE)
(74) Vertreter: Lang, Christian

(56) Entgegenhaltungen:
- EP-A2- 1 559 871
- DE-A1- 1 816 216
- US-A- 5 149 405
- US-A1- 2009 211 921

## Beschreibung

### GEBIET DER ERFINDUNG

Die vorliegende Erfindung betrifft ein Verfahren zur Bearbeitung eines Werkstücks, bei dem eine Elektrode im Abstand zu dem zu bearbeitenden Werkstück angeordnet wird und in Richtung des zu bearbeitenden Werkstücks linear verfahren wird, um zu bewirken, dass während der Annäherung an das Werkstück Material vom Werkstück abgetragen wird, wobei zumindest ein Ende oder ein Abschnitt eines Endes einer zu bearbeitenden Fläche des Werkstücks schräg zu einer Führungskante der diese Fläche bearbeitenden Elektrode verläuft und die Elektrode zumindest zum Teil mit der Elektrodenfläche parallel zur zu bearbeitenden Fläche bewegt wird, so dass bei der Annäherung an das Werkstück unterschiedlich stark bearbeitete Bereiche des Werkstücks mit einer ungleichmäßigen Randkante entstehen, außerdem betrifft die vorliegende Erfindung Schaufelkranzsegmente für einen Schaufelkranz einer Strömungsmaschine sowie einen entsprechenden Schaufelkranz, wobei die Schaufelkranzsegmente mit dem oben genannten Verfahren hergestellt werden.

### STAND DER TECHNIK

Für Strömungsmaschinen, wie beispielsweise Gasturbinen oder Flugtriebwerke können Schaufelkränze verwendet werden, bei denen eine Vielzahl von Schaufelkranzsegmenten mit jeweils mindestens einem Schaufelblatt und einem inneren und/oder äußerem Deckband zu einem Schaufelkranz zusammengesetzt werden. Die Schaufelprofile der einzelnen Schaufelkranzsegmente definieren zwischen sich einen Ringraum durch den das Arbeitsgas strömt, wobei der Ringraum durch die Deckbänder begrenzt wird und die Deckbänder entsprechende Ringraumbegrenzungsflächen aufweisen.

Derartige Schaufelkranzsegmente werden nach dem Stand der Technik durch Gießen oder Schmieden hergestellt, wobei insbesondere bei neueren, leichten Werkstoffen, wie z.B. TiAl-Werkstoffen, ein Schmieden zur Festigkeitssteigerung erforderlich ist. Entsprechend hergestellte Schaufelkranzsegmente müssen zur Erzielung der gewünschten Oberflächenform mechanisch nachbearbeitet werden, wobei beispielsweise elektrochemische Bearbeitungsverfahren zum Einsatz kommen, bei denen mit Hilfe von Arbeitselektroden und geeigneten Elektrolyten ein elektrochemischer Abtrag von Material von der zu bearbeitenden Werkstückfläche erzielt wird.

Bei der elektrochemischen Bearbeitung wird die Arbeitselektrode in einer linearen Bewegung an die zu bearbeitende Oberfläche des Werkstücks angenähert, sodass durch das eingestellte Potential zwischen der Arbeitselektrode und der zu bearbeitenden Werkstücksfläche ein entsprechender Materialabtrag stattfindet. Durch die lineare Bewegung der Elektrode in Richtung der zu bearbeitenden Werkstückoberfläche bei der Bearbeitung kommt es je nach Abstand von der zu bearbeitenden Oberfläche und der Bearbeitungsdauer zu einem unterschiedlich starken Materialabtrag. Entsprechend kann es durch einen vorgegebenen Bewegungspfad der Elektrode und der Geometrie des Schaufelkranzsegmentes zur Ausbildung eines Höhenprofils entlang der Endkante von Deckbändern des Schaufelkranzsegments kommen, insbesondere bei Z-förmig ausgebildeten Endbereichen von Außendeckbändern, die zur formschlüssigen Verbindung von benachbarten Schaufelkranzsegmenten Verwendung finden, wenn die Endkante des Deckbandes unterschiedlich lange mit unterschiedlichem Abstand gegenüber der Elektrode angeordnet ist. Durch das elektrochemische Bearbeiten des Deckbandes, während die Elektrode über das Z-förmige Ende des Deckbands bewegt wird, kommt es somit zu einem unterschiedlich starken Materialabtrag entlang der Z-förmigen Randkante, sodass bei benachbarten Schaufelkranzsegmenten Stufen zwischen den Ringraumbegrenzungsflächen auftreten, was zu einer negativen Beeinflussung der Strömungsverhältnisse im Ringraum führt.

Die US 2009/0211921 A1 offenbart ein Verfahren zum Abtragen einer Wulst an einer Schaufel einer Strömungsmaschine gemäß dem Oberbegriff des Anspruchs 1, wobei der fertig bearbeitete Schaufelfuß mit einer Metallschicht überzogen wird, um einen weiteren Abtrag zu vermeiden. Durch die Beschichtung wird ein unerwünschter ungleichmäßiger Abtrag vermieden. Die EP 1 559 871 A2 offenbart ein Schafelkranzsegment mit einer welligen Ringraumbegrenzungsfläche gemäß dem Oberbegriff des Anspruchs 6.

### OFFENBARUNG DER ERFINDUNG

### AUFGABE DER ERFINDUNG

Es ist deshalb Aufgabe der vorliegenden Erfindung, ein Verfahren zur Bearbeitung eines Werkstücks bereitzustellen, bei dem entsprechende Probleme, wie sie im Stand der Technik gegeben sind, vermieden werden, wobei dieses Verfahren insbesondere zur Bearbeitung von Schaufelkranzsegmenten für Schaufelkränze von Strömungsmaschinen eingesetzt werden soll. Darüber hinaus sollen Schaufelkranzsegmente bzw. Schaufelkränze bereitgestellt werden, bei denen das Problem von Stufen zwischen benachbarten Ringraumbegrenzungsflächen an Deckbändern vermieden wird.

### TECHNISCHE LÖSUNG

Diese Aufgabe wird gelöst durch ein Verfahren mit den Merkmalen des Anspruchs 1 sowie ein Schaufelkranzsegment mit den Merkmalen des Anspruchs 6 und einen Schaufelkranz mit den Merkmale des Anspruch 9 Vorteilhafte Ausgestaltungen sind Gegenstand der abhängigen Ansprüche.

Die Erfindung geht aus von der Erkenntnis, dass bei der Bearbeitung eines Werkstücks, wie beispielsweise eines Schaufelkranzsegments, mit mindestens einer Elektrode, die im Abstand zu dem zu bearbeitenden Werkstück angeordnet wird und bei der Bearbeitung in Richtung des zu bearbeitenden Werkstücks linear verfahren wird, einem unterschiedlichen Materialabtrag und einer entsprechenden Ausbildung einer bezüglich des Höhenprofils ungleichmäßigen Randkante dadurch begegnet werden kann, dass im Bereich der unterschiedlich starken Bearbeitung der Randkante die zu bearbeitende Fläche entsprechend dem Verlauf der Randkante mit einem entsprechend gegengerichteten Höhenprofil ausgebildet wird. Bewegt sich nämlich die Elektrode zumindest mit einem Anteil ihrer Bewegung, also mit einem Teilvektor des Bewegungsvektors parallel zur zu bearbeitenden Fläche des Werkstücks und ist ein Abschnitt des Endes der zu bearbeitenden Fläche des Werkstücks schräg zu einer in Bewegungsrichtung der Elektrode führenden Führungskante der bearbeitenden Elektrode ausgerichtet, so kommt es zu dem Fall, dass die Elektrode bestimmte Bereiche der zu bearbeitenden Werkstückfläche früher erreicht und länger oder mit geringerem Abstand bearbeitet als andere Bereiche, sodass ein unterschiedlich starker Materialabtrag stattfindet. Durch das Vorsehen eines Höhenprofils für die zu bearbeitende Fläche kann dies ausgeglichen werden, sodass die Randkante bezüglich des Höhenprofils korrigiert wird.

Entsprechend kann in Bereichen, die früher bzw. länger in Wechselwirkung mit der Elektrode stehen ein erhöhtes Profil und somit ein geringerer Materialabtrag vorgesehen werden, während in Bereichen, die kürzer oder später mit der Elektrode in Wechselwirkung stehen, ein stärkerer Material abtrag bzw. ein entsprechendes Tal oder abgesenktes Höhenprofil.

Das Verfahren kann für alle Verfahren eingesetzt werden, bei denen Elektroden in entsprechender Weise bezüglich einer zu bearbeitender Werkstückfläche bewegt werden, wie beispielsweise das elektrochemische Bearbeiten ECM (electro chemical machining), das Erodieren, das Funkenerodieren, EDM (electro discharge machining) oder das elektrochemische Funkenerodieren ECDM (electro chemical discharge machining).

Insbesondere kann das erfindungsgemäße Verfahren bei der Bearbeitung von Schaufelkranzsegmenten eines Schaufelkranzes mit äußerem und/oder innerem Deckband eingesetzt werden, um die Randkanten der Deckbänder benachbarter Schaufelkranzsegmente aneinander anzupassen.

Das Verfahren kann somit zur gegenseitigen Anpassung der Z-förmigen Randkanten benachbarter Deckbänder von Schaufelkranzsegementen eingesetzt werden, wobei entsprechend dem Z-Profil eines Endes eines Deckbands eine wellenförmige Topographie bzw. ein wellenförmiges Höhenprofil an der Ringraumbegrenzungsfläche des Deckbands vorgesehen werden kann.

Bei einer Bewegungsrichtung der Elektrode quer zum Ende des Deckbands mit dem Z-förmigen Profil kann das wellenförmige Höhenprofil der Ringraumbegrenzungsfläche so ausgebildet sein, dass an den Vorsprüngen des Z-Profils Berge vorgesehen sind und an den zurückgesetzten Bereichen des Z-Profils Täler. Diese Berge und Täler des wellenförmigen Höhenprofils können sich gemäß der Bearbeitungsrichtung mit der die Elektrode bezüglich der Ringraumbegrenzungsfläche bewegt wird, fortsetzen, und zwar beispielsweise in Umfangsrichtung des Schaufelkranzes, für den das Schaufelkranzsegment vorgesehen ist, wenn die Bewegungsrichtung der Elektrode in dieser Richtung erfolgt.

Das wellige Höhenprofil kann insbesondere an der druckseitigen Ringraumbegrenzungsfläche vorgesehen sein, da die Einflüsse der Wellenform auf die Strömungsverhältnisse dort geringere Auswirkungen aufweisen.

Ein entsprechender Schaufelkranz mit Schaufelkranzsegmenten, die wellenförmige Ringraumbegrenzungsflächen aufweisen kann so aufgebaut sein, dass abwechselnd gerade, ebene Ringraumbegrenzungsflächen an wellenförmige Ringraumbegrenzungsflächen angrenzen, wobei die wellenförmigen Ringraumbegrenzungsflächen eine Anpassung der Randkante an das benachbarte Schaufelkranzsegment aufweisen. Folglich können abwechselnd Schaufelkranzsegmente mit jeweils einer wellenförmigen Ringraumbegrenzungsfläche und einer glatten, ebenen Ringraumbegrenzungsfläche angeordnet werden. In gleicher Weise ist es vorstellbar jeweils abwechselnd Schaufelkranzsegmente vorzusehen, die zwei wellenförmige Ringraumbegrenzungsflächen aufweisen, während das benachbarte Schaufelkranzsegment keine wellenförmige Ringraumbegrenzungsfläche aufweist, sondern lediglich glatte, ebene Ringraumbegrenzungsflächen besitzt. Unter glatter, ebener Ringraumbegrenzungsfläche wird eine Fläche verstanden, die keine wellenförmige Anpassung der Oberflächentopographie gemäß der vorliegenden Erfindung aufweist.

Die unterschiedlichen Anordnungen der Schaufelkranzsegmente kann auch entsprechend miteinander kombiniert werden, sodass beispielsweise zunächst Schaufelkranzsegmente mit jeweils einer wellenförmigen Ringraumbegrenzungsfläche nebeneinander angeordnet werden und dann übergegangen wird zu einer abwechselnden Anordnung von Schaufelkranzsegmenten mit entweder zwei wellenförmigen Ringraumbegrenzungsflächen oder keiner wellenförmigen Ringraumbegrenzungsfläche.

### KURZBESCHREIBUNG DER FIGUREN

Die beigefügten Zeichnungen zeigen in rein schematischer Weise in
Fig. 1 einen Teil eines Schaufelkranzes einer Strömungsmaschine mit benachbarten Schaufelkranzsegmenten nach dem Stand der Technik in perspektivischer Darstellung;
Fig. 2 eine Draufsicht auf ein Schaufelkranzsegment;
Fig. 3 eine teilweise Schnittdarstellung des Schaufelkranzsegments aus Fig. 2 gemäß der Schnittlinie B-B;
Fig. 4 eine Darstellung der ECM-Bearbeitung eines Deckbands mit Z- förmiger Endkante, wobei die Teilansicht a) eine Draufsicht, die Teilansicht b) eine Seitenansicht und die Teilansicht c) eine Frontansicht zeigen; und in
Fig. 5 eine perspektivische Darstellung ähnlich der Darstellung der Fig. 1 mit einer erfindungsgemäßen wellenförmigen Ringraumbe- grenzungsfläche.

### AUSFÜHRUNGSBEISPIEL

Weitere Vorteile, Kennzeichen und Merkmale der vorliegenden Erfindung werden bei der nachfolgenden detaillierten Beschreibung eines Ausführungsbeispiels deutlich werden. Allerdings ist die Erfindung nicht auf dieses Ausführungsbeispiel beschränkt.

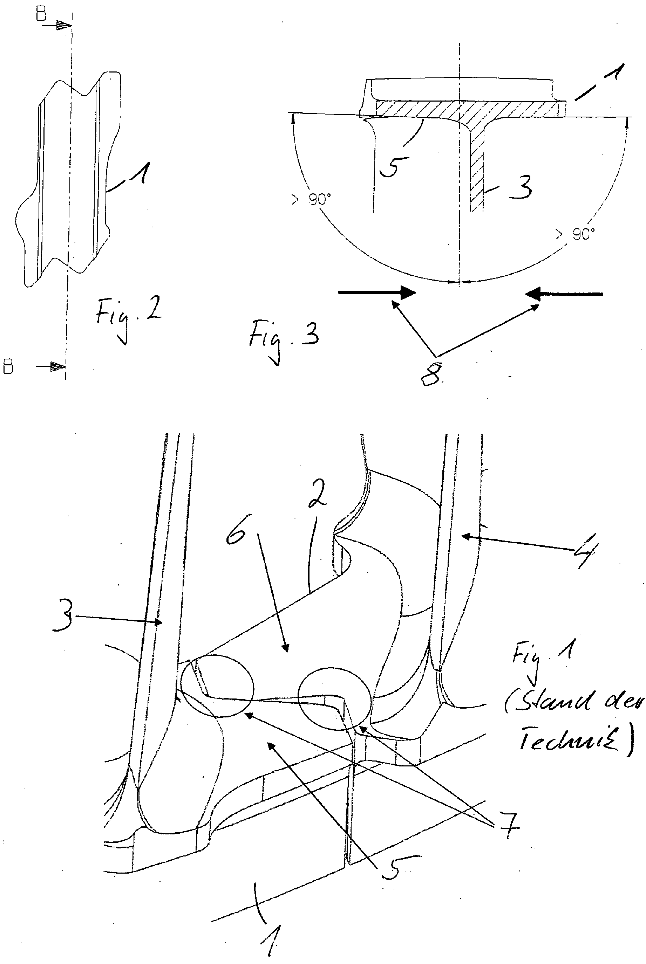

Die Fig. 1 zeigt einen Teil eines Schaufelkranzes mit zwei benachbarten Schaufelkranzsegmenten 1 und 2, wie sie bei Strömungsmaschinen, wie beispielsweise Gasturbinen oder Flugtriebwerken, eingesetzt werden. Die benachbarten Schaufelkranzsegmente 1 und 2 weisen in dem gezeigten Ausführungsbeispiel zwei Deckbänder mit Ringraumbegrenzungsflächen 5,6 auf, die an ihren Endkanten in einer Z-Form komplementär zueinander ausgebildet sind, sodass die Schaufelkranzsegmente 1 und 2 miteinander formschlüssig verbunden sind. Üblicherweise wird diese Z-Profilform an den Außendeckbändern vorgesehen, wobei zur besseren Darstellung die Fig. 1 um 180° Grad gedreht ist, sodass das äußere Deckband unten dargestellt ist.

Die Schaufelkranzsegmente 1 und 2 weisen jeweils ein Schaufelprofil 3 und 4 auf, welche bezüglich der Umfangsrichtung des Schaufelkranzes schräg bzw. quer und/oder gekrümmt angeordnet sind.

Die Fig. 2 und 3 zeigen eine Draufsicht (Fig. 2) auf ein Schaufelkranzsegment 1 sowie eine Schnittdarstellung (Fig. 3) entlang der Schnittlinie B-B aus Fig. 2.

Bei der Herstellung von entsprechenden Schaufelkranzsegmenten müssen diese formgebend endbearbeitet werden, insbesondere wenn die Schaufelkranzsegmente schmiedetechnisch hergestellt worden sind, um den Schaufelkranzsegmenten durch das Schmieden die erforderliche Festigkeit zu verleihen. Dies ist beispielsweise bei Schaufelkranzsegmenten, die aus leichten TiAl-Werkstoffen herstellt werden sollen, der Fall. Als mögliche Bearbeitung der Schaufelkranzsegmente und insbesondere der Schaufelprofilflächen und der Deckbandflächen 5 und 6, die den sogenannten Profilraum zwischen den Schaufelprofilen 3, 4 begrenzen, kommen elektrochemische Bearbeitungsverfahren in Frage. Bei der sogenannten elektrochemischen Bearbeitung (electro chemical machining ECM) werden eine oder mehrere Formelektroden in der Nähe der zu bearbeitenden Werkstückflächen angeordnet und bis zu einem definierten Abstand in Richtung der Werkstückoberfläche verfahren, sodass durch ein angelegtes Potential zwischen der Elektrode und der Werkstückoberfläche bei Anwesenheit eines geeigneten Elektrolyten ein Materialabtrag an der zu bearbeitenden Werkstückoberfläche erfolgt. Hierbei kommt es bezüglich des Materialabtrags auf die Bearbeitungsdauer und den Abstand der Elektrode von der zu bearbeitenden Werkstückoberfläche an.

Die Fig. 3 zeigt beispielsweise mit den Pfeilen 8 die Bewegungsrichtung bzw. Zustellrichrung der Elektroden für die Bearbeitung der Profilflächen des Schaufelprofils 3 und der Ringraumbegrenzungsfläche 5 des Schaufelkranzsegments 1. Die Bewegung der Elektrode bei der ECM-Bearbeitung erfolgt linear. Hierbei kann es bei bestimmter Anordnung der zu bearbeitenden Werkstückfläche zu der Arbeitselektrode während der Annäherung zu einem unterschiedlich großen Materialabtrag in verschiedenen Bereiche der Werkstückfläche kommen. Dies führt beispielsweise an den Enden der Deckbänder mit Z-Profil dazu, dass die Randkanten der Ringraumbegrenzungsflächen 5, 6 ein unterschiedliches Höhenprofil aufweisen. Bei benachbarten Schaufelkranzsegmenten 1 und 2 können somit Stufen 7 an den Kontaktbereichen der benachbarten Schaufelkranzsegmente 1, 2 vorliegen, die unerwünscht sind, da sie die Strömungsverhältnisse im Ringraum ungünstig beeinflussen können.

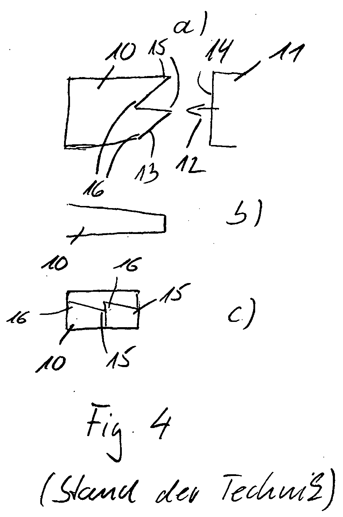

Die Fig. 4a) bis 4c) zeigen noch einmal in einer schematischen Art und Weise, wie es zur Ausbildung der Stufen 7 bei benachbarten Ringkranzsegmenten 1, 2 kommen kann. In Fig. 4a) ist eine Draufsicht auf ein Deckband 10 mit einer Z-förmigen Endkante 13 gezeigt, wobei eine Arbeitselektrode 11 zur Bearbeitung des Deckbands 10 sich entsprechend der Bewegungsrichtung, die durch den Bewegungspfeil 12 gekennzeichnet ist, über das Deckband 10 schiebt. Hierbei muss es sich nicht um eine reine parallele Bewegung der Elektrode 11 entlang des Deckbands 10 bzw. der zu bearbeitenden Fläche handeln, sondern es genügt im Prinzip ein Bewegungsanteil, also ein Bewegungsteilvektor entsprechend der Bewegungsrichtung 12. Aus der Fig. 4a) wird deutlich, dass die Elektrode 11 mit ihrer Führungskante 14 bei der Z-förmigen Endkante 13 zunächst die hervorstehenden Spitzen 15 des Z-Profils erreicht, sodass dort eine Bearbeitung bzw. ein Materialabtrag beginnt. Mit zusätzlicher Bewegung in Richtung der Bewegungsrichtung 12 schreitet die Bearbeitung fort, sodass auch die Randkante 13 im Bereich der Einbuchtungen bzw. Aussparungen 16 erreicht wird und dort die Bearbeitung bzw. der Materialabtrag beginnt. Allerdings ergibt sich durch die Bewegung der Elektrode 11 in der Bewegungsrichtung 12 ein keilförmiger Abtrag, wie er im Teilbild b) der Fig. 4 dargestellt ist. Da die Randkante 13 nicht senkrecht zur Bewegungsrichtung 12 verläuft ergibt sich in der Frontansicht, also in einer Sicht gemäß der Bewegungsrichtung 12 ein Bild, das zeigt, dass im Bereich der Spitzen 15 ein großer Materialabtrag stattgefunden hat, während im Bereich der zurückversetzten Bereiche 16 ein geringerer Materialabtrag stattgefunden hat, sodass sich ein Höhenprofil der Randkante 13 ergibt. Da bei einem benachbarten Schaufelkranzsegment die Bearbeitung in der gleichen Weise erfolgt, ergeben sich an den Kontaktbereichen die in Fig. 1 gezeigten Stufen, die unerwünscht sind.

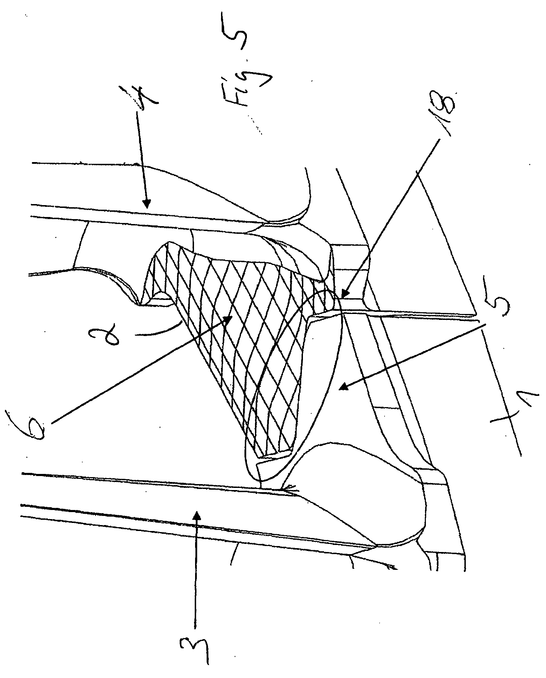

Die Erfindung schlägt nun vor das Höhenprofil an der Randkante dadurch zu korrigieren bzw. an ein benachbartes Schaufelkranzsegment anzupassen, dass ein wellenförmiges Höhenprofil an mindestens einer Ringraumbegrenzungsfläche eines Schaufelkranzsegments eingestellt wird. Dies ist in der Fig. 5 gezeigt. Bei der gezeigten Ausführungsform ist die druckseitige Ringraumbegrenzungsfläche 6 des Schaufelkranzsegments 2 wellenförmig ausgebildet, während die benachbarte Ringraumbegrenzungsfläche 5 auf der Saugseite des Schaufelkranzsegments 1 weiterhin glatt ausgebildet ist. Die Wellenform der Ringraumbegrenzungsfläche 6 ist an die Randkante angepasst, sodass im Bereich der vorstehenden Randkante, also im Bereich von Vorsprüngen 15, ein Berg im Höhenprofil ausgebildet ist, während an zurückgesetzten Bereichen, also im Bereich der Ausnehmungen 16, Täler in der Topographie des wellenförmigen Höhenprofils der Ringraumbegrenzungsfläche 6,ausgebildet ist. Das wellenförmige Höhenprofil der Ringraumbegrenzungsfläche 6 setzt sich entsprechend der linearen Bewegung der Elektrode fort und weist beispielsweise bei der vorliegenden Ausführungsform eine Erstreckung in Umfangsrichtung des Schaufelkranzes auf.

Die Amplitude des wellenförmigen Höhenprofils hängt ab von dem Radius des Schaufelkranzes, von der Anzahl der Schaufelkranzsegmente, von dem Formwinkel bzw. der Formschräge des Deckbands und der Z-Form des Endbereichs des Deckbands. Je kleiner beispielsweise der Radius des Schaufelkranzes ist oder je kleiner die Anzahl der Schaufelkranzsegmente ist, desto stärker ist das wellenförmige Höhenprofil auszubilden. Die Größenordnung der Amplitude eines entsprechenden wellenförmigen Höhenprofils liegt im Bereich von 0,2 mm bis 1 mm vorzugsweise 0,4 mm bis 0,8 mm oder 0,5 mm bis 0,6 mm bei einem Schaufelkranzdurchmesser im Bereich von 400 mm bis 450 mm und einer Anzahl an Schaufelkranzsegmenten im Bereich von 75 bis 80.

Obwohl die vorliegende Erfindung anhand des Ausführungsbeispiels detailliert beschrieben worden ist, ist für den Fachmann selbstverständlich, dass die Erfindung nicht auf dieses Ausführungsbeispiel beschränkt ist. Vielmehr sind Abwandlungen in der Weise möglich, dass einzelne Merkmale weggelassen werden oder andersartige Kombinationen von Merkmalen vorgenommen werden, ohne das der Schutzbereich der beigefügten Ansprüche verlassen wird.

## Patentansprüche

1. Verfahren zur Bearbeitung eines Werkstücks, bei dem eine Elektrode im Abstand zu einem zu bearbeitenden Werkstück angeordnet wird und in Richtung des zu bearbeitenden Werkstücks linear verfahren wird, um zu bewirken, dass während der Annäherung an das Werkstück Material vom Werkstück abgetragen wird, wobei zumindest ein Ende oder ein Abschnitt eines Endes einer zu bearbeitenden Fläche des Werkstücks schräg zu einer Führungskante (14) der diese Fläche bearbeitenden Elektrode verläuft und die Elektrode zumindest zum Teil mit der Elektrodenfläche parallel zur zu bearbeitenden Fläche (10) bewegt wird, so dass bei der Annäherung an das Werkstück unterschiedlich stark bearbeitete Bereiche des Werkstücks mit einer ungleichmäßigen Randkante (13) entstehen,
**dadurch gekennzeichnet, dass**
die unterschiedlich starke Bearbeitung an der Randkante der zu bearbeitenden Fläche dadurch kompensiert wird, dass die zu bearbeitende Fläche mit einem dem Verlauf des Endes der zu bearbeitenden Fläche angepassten Höhenprofil versehen wird.

2. Verfahren nach Anspruch 1,
**dadurch gekennzeichnet, dass**
das Höhenprofil in Bereichen (15), in denen das Ende der zu bearbeitenden Fläche in entgegengesetzter Richtung zu dem zur Fläche parallelen Bewegungsrichtungsanteil hervorsteht und von der Führungskante (14) der Elektrode zuerst überschritten wird, ein geringerer Materialabtrag und somit ein erhöhtes Profil vorgesehen wird, als in Bereichen (16), in denen das Ende der zu bearbeitenden Fläche in Richtung zu dem zur Fläche parallelen Bewegungsrichtungsanteil zurückgezogen ist und von der Führungskante der Elektrode später überschritten wird und somit ein abgesenktes Profil vorgesehen wird.

3. Verfahren nach Anspruch 1 oder 2,
**dadurch gekennzeichnet, dass**
das Verfahren den elektrochemischen Materialabtrag (ECM), das Erodieren, das Funkenerodieren (EDM (electro discharge machining)) oder das elektrochemische Funkenerodieren (ECDM (elctrochemical discharge machining)) verwendet.

4. Verfahren nach einem der vorhergehenden Ansprüche,
**dadurch gekennzeichnet, dass**
es bei der Bearbeitung von Schaufelkranzsegmenten (1,2) eines Schaufelkranzes mit äußerem und/oder innerem Deckband eingesetzt wird, um die Randkanten benachbarter Schaufelkranzsegmente aneinander anzupassen.

5. Verfahren nach einem der vorhergehenden Ansprüche,
**dadurch gekennzeichnet, dass**
die Elektrode zumindest mit einem Bewegungsanteil, quer zu einer Z-förmigen Kante des Deckbands in Umfangsrichtung des Schaufelkranzes bewegt wird, so dass das Deckband ein Höhenprofil mit in Umfangsrichtung verlaufenden Bergen und/oder Tälern erhält, wobei die Berge im Bereich der in Umfangsrichtung hervorstehenden Abschnitte des Endes des Deckbandes und die Täler in Bereichen der in Umfangsrichtung zurückgezogenen Abschnitte des Endes des Deckbands vorgesehen werden.

6. Schaufelkranzsegment für einen Schaufelkranz einer Strömungsmaschine mit einem äußeren und/oder inneren Deckband, wobei das Deckband mit seiner radial zum Schaufelprofil gewandten Seite einen Ringraum begrenzt und mindestens eine, vorzugsweise jeweils eine Ringraumbegrenzungsfläche (5,6) an einer Druckseite und einer Saugseite eines Schaufelprofils des Schaufelkranzsegments definiert, wobei
zumindest eine Ringraumbegrenzungsfläche mit einem welligen Höhenprofils ausgebildet ist,
**dadurch gekennzeichnet, dass**
das wellige Höhenprofil von einer Z-förmigen Endkante (13) des Deckbands ausgeht, wobei das wellige Höhenprofil im Bereich der Vorsprünge der Z-förmigen Endkante Berge und im Bereich der Einbuchtungen der Z-förmigen Endkante Täler aufweist und sich die Täler und Berge in Umfangsrichtung des Schaufelkranzes erstrecken.

7. Schaufelkranzsegment nach Anspruch 6,
**dadurch gekennzeichnet, dass**
das wellige Höhenprofil an der druckseitigen Ringraumbegrenzungsfläche (5) und/oder am Außendeckband ausgebildet ist.

8. Schaufelkranzsegment nach einem der Ansprüche 6 bis 7,
**dadurch gekennzeichnet, dass**
das Schaufelkranzsegment hinterschnittfrei ausgebildet ist und/oder geschmiedet ist.

9. Schaufelkranz für eine Strömungsmaschine mit einer Vielzahl von Schaufelkranzsegmenten,
**dadurch gekennzeichnet, dass**
die Schaufelkranzsegmente mehrere Schaufelkranzsegmente (1,2) nach einem der Ansprüche 6 bis 8 umfassen, die so im Schaufelkranz angeordnet sind, dass die Deckbänder an den Kontaktstellen keinen Höhenversatz aufweisen.

10. Schaufelkranz nach Anspruch 9,
**dadurch gekennzeichnet, dass**
die Schaufelkranzsegmente (1,2) im Schaufelkranz abwechselnd mit jeweils einem welligen Ringraum und einem ebenen Ringraum angeordnet sind, wobei welliger und ebener Ringraum jeweils aneinander grenzen, oder dass abwechselnd Schaufelkranzsegmente ohne wellige Ringräume und Schaufelkranzsegmente mit zwei welligen Ringräumen angeordnet sind, oder dass Kombinationen aus den unterschiedlichen Anordnungen vorgesehen sind.

## Claims

1. A method for machining a workpiece, in which an electrode is arranged at a distance from a workpiece to be machined and is moved linearly in the direction of the workpiece to be machined to cause material to be removed from the workpiece during the approach to the workpiece, wherein at least one end or one section of one end of a surface of the workpiece to be machined extends obliquely to a guide edge (14) of the electrode machining this surface and the electrode is moved at least partially with the electrode surface parallel to the surface to be machined (10), so that, during an approach to the workpiece, areas of the workpiece machined to a different intensity and having an irregular edge (13) are formed,
**characterised by the fact that**
the difference in intensity of machining on the edge of the surface to be machined is compensated by the fact that the surface to be machined is provided with a height profile adapted to the shape of the end of the surface to be machined.

2. Method in accordance with claim 1,
**characterised by the fact that**
the height profile in areas (15) in which the end of the surface to be machined protrudes in the opposite direction from the direction of movement component parallel to the surface, and is passed by the guide edge (14) of the electrode first, a lesser material removal and thus an elevated profile is provided than in areas (16) in which the end of the surface to be machined is recessed in the direction of the direction of movement component parallel to the surface and is passed by the guide edge of the electrode at a later point in time and therefore a lowered profile is provided.

3. The method of claim 1 or 2,
**characterised by the fact that**
the method utilises electrochemical machining (ECM), erosion, electrodischarge machining (EDM) or electrochemical discharge machining (ECDM).

4. Method in accordance with any of the previous claims,
**characterised by the fact that**
it is used in the machining of blade ring segments (1, 2) of a blade ring having an outer and/or inner shroud to adjust the boundary edges of adjacent blade ring segments to one another.

5. Method in accordance with any of the previous claims,
**characterised by the fact that**
the electrode is moved with at least one movement component across a Z-shaped edge of the shroud in the circumferential direction of the blade ring, so that the shroud receives a height profile having peaks and/or valleys running in the circumferential direction, wherein the peaks are provided in the area of the sections of the end of the shroud protruding in the circumferential direction, and the valleys are provided in areas of the sections of the end of the shroud recessed in the circumferential direction.

6. Blade ring segment for a blade ring of a turbomachine having an outer and/or an inner shroud, wherein the shroud delimits an annular space with its side facing the blade profile radially and defines at least one, preferably in each case one, annular space delimiting surface (5, 6) on a pressure side and an intake side of a blade profile of the blade ring segment, wherein at least one annular room delimiting surface is formed with a wavy height profile,
**characterised by the fact that**
the wavy height profile extends from a Z-shaped end edge (13) of the shroud, wherein the wavy height profile has peaks in the area of the protrusions of the Z-shaped end edge and has valleys in the areas of the indentations of the Z-shaped end edge and the valleys and peaks extend in the circumferential direction of the blade ring.

7. Blade ring segment in accordance with claim 6,
**characterised by the fact that**
the wavy height profile is formed on the pressure-side annular space delimiting surface (5) and/or on the outer shroud.

8. Blade ring segment in accordance with any of claims 6 to 7,
**characterised by the fact that**
the blade ring segment is formed without any undercuts and/or is forged.

9. Blade ring for a turbomachine comprising a plurality of blade ring segments,
**characterised by the fact that**
the blade ring segments comprise a plurality of blade ring segments (1, 2) according to any of claims 6 to 8, which are disposed in the blade ring in such a way that the shrouds do not have any height offset at the contact points.

10. Blade ring according to claim 9,
**characterised by the fact that**
the blade ring segments (1,2) in the blade ring are disposed in alternation with one respective wavy annular space and one respective planar annular space, wherein wavy and planar annular spaces are adjacent to one another, or that blade ring segments without any wavy annular spaces and blade ring segments having two wavy annular spaces are disposed in alternation or that combinations of the different configurations are provided.

## Revendications

1. Procédé pour usiner une pièce pour lequel une électrode est placée à une distance d'une pièce à usiner et est déplacée linéairement en direction de la pièce à usiner pour provoquer que, pendant qu'elle s'approche de la pièce, de la matière est enlevée de la pièce, cependant qu'au moins une extrémité ou une section d'une extrémité d'une surface à usiner de la pièce est dirigée en biais par rapport à une arête de guidage (14) de l'électrode qui usine cette surface et l'électrode est déplacée au moins en partie avec la surface de l'électrode parallèlement à la surface à usiner (10) de telle manière que, lorsqu'elle s'approche de la pièce, on obtient des zones de la pièce qui sont usinées avec une intensité différente avec une arête marginale irrégulière (13),
**caractérisé en ce que** l'usinage d'intensité différente est compensé sur l'arête marginale de la surface à usiner par le fait que la surface à usiner est pourvue d'un profil de hauteur adapté au tracé de l'extrémité de la surface à usiner.

2. Procédé selon la revendication 1, **caractérisé en ce qu'**il est prévu, dans les zones (15) dans lesquelles l'extrémité de la surface à usiner fait saillie dans la direction contraire à la partie de direction de déplacement qui est parallèle à la surface et est tout d'abord dépassée par l'arête de guidage (14) de l'électrode, un enlèvement de matière plus faible et donc un profil de hauteur plus élevé que dans les zones (16) dans lesquelles l'extrémité de la surface à usiner est en retrait dans la direction de la partie de direction de déplacement qui est parallèle à la surface et est plus tard dépassée par l'arête de guidage de l'électrode et un profil abaissé est ainsi prévu.

3. Procédé selon la revendication 1 ou 2, **caractérisé en ce que** le procédé utilise l'enlèvement de matière par usinage électrochimique (UEC), l'érosion, l'érosion par décharges électriques EDM (electro discharge machining) ou l'usinage par décharges électrochimiques ECDM (electrochemical discharge machining).

4. Procédé selon l'une des revendications précédentes, **caractérisé en ce qu'**il est mis en oeuvre pour l'usinage de segments de roue à aubes (1, 2) d'une roue à aubes avec une enveloppe extérieure et/ou intérieure pour adapter l'une à l'autre les arêtes marginales de segments de roue à aubes voisins,

5. Procédé selon l'une des revendications précédentes, **caractérisé en ce que** l'électrode est déplacée au moins avec une partie de déplacement transversalement par rapport à une arête en forme de Z de l'enveloppe dans le sens de la circonférence de la roue à aubes si bien que l'enveloppe obtient un profil de hauteur avec des crêtes et/ou des creux dans le sens de la circonférence, cependant que les crêtes sont prévues dans la zone des sections en saillie dans le sens de la circonférence de l'extrémité de l'enveloppe et les creux dans des zones des sections en retrait dans le sens de la circonférence de l'extrémité de l'enveloppe.

6. Segment de roue à aubes pour une roue à aubes d'une turbomachine avec une enveloppe extérieure et/ou intérieure, cependant que l'enveloppe délimite, avec son côté tourné dans le sens radial vers le profil d'aube, un espace annulaire et définit au moins une, de préférence respectivement une surface de délimitation d'espace annulaire (5, 6), sur un côté pression et un côté aspiration d'un profil d'aube du segment de roue à aube, cependant qu'au moins une surface de délimitation d'espace annulaire est configurée avec un profil de hauteur ondulé, **caractérisé en ce que** le profil de hauteur ondulé part d'une arête d'extrémité en forme de Z (13) de l'enveloppe, cependant que le profil de hauteur ondulé présente, dans la zone des saillies de l'arête d'extrémité en forme de Z, des crêtes et présente des creux dans la zone des parties rentrantes de l'arête d'extrémité en forme de Z et que les crêtes et les creux s'étendent dans le sens de la circonférence de la roue à aubes.

7. Segment de roue à aubes selon la revendication 6, **caractérisé en ce que** le profil de hauteur ondulé est configuré sur la surface de délimitation d'espace annulaire côté pression (5) et/ou sur l'enveloppe extérieure.

8. Segment de roue à aubes selon une des revendications 6 à 7, **caractérisé en ce que** le segment de roue à aubes est configuré sans contre-dépouille et/ou est forgé.

9. Roue à aubes pour une turbomachine avec une multitude de segments de roue à aubes, **caractérisée en ce que** les segments de roue à aubes comprennent plusieurs segments de roue à aubes (1, 2) selon l'une des revendications 6 à 8 qui sont placés dans la roue à aubes de telle manière que les enveloppes ne présentent pas de décalage de hauteur aux points de contact.

10. Roue à aubes selon la revendication 9, **caractérisée en ce que** les segments de roue à aubes (1, 2) sont placés dans la roue à aubes en alternance avec respectivement un espace annulaire ondulé et un espace annulaire plat, cependant que l'espace annulaire ondulé et l'espace annulaire plat sont respectivement adjacents l'un à l'autre ou que des segments de roue à aubes sans espaces annulaires ondulés sont placés en alternance avec des segments de roue à aubes avec deux espaces annulaires ondulés ou que des combinaisons des différents arrangements sont prévues.
